# EUROPÄISCHE PATENTSCHRIFT

(11) **EP 0 565 874 B1**
(45) Veröffentlichungstag und Bekanntmachung des Hinweises auf die Patenterteilung: **12.06.1996**
(21) Anmeldenummer: 93104114.9
(22) Anmeldetag: 13.03.1993
(51) Int. Cl.: B29C 49/68, B29C 49/64

(54) **Verfahren und Vorrichtung zur Erhitzung von einem Vorrat entnommenen, im Spritzverfahren hergestellten Vorformling aus teilkristallinen Kunststoffen**
Process and apparatus for heating a stored preform made by the injection moulding process with a partly cristalline plastic material
Procédé et appareil pour réchauffer une préforme retirée d'un stock et produite par injection d'un matériau plastique partiellement cristallin

(30) Priorität: 11.04.1992 DE 4212248
(43) Veröffentlichungstag der Anmeldung: 20.10.1993
(73) Patentinhaber: BEKUM Maschinenfabriken GmbH, D-12107 Berlin (DE)
(72) Erfinder: Gittner, Franz, W-3111 Soltendieck (DE); Roos, Uwe-Volker, W-3123 Bodenteich (DE)
(74) Vertreter: Huss, Carl-Hans, Dipl.-Ing.

(56) Entgegenhaltungen:
- EP-A- 0 387 737
- DE-A- 3 101 282
- DE-A- 3 826 841
- FR-A- 2 248 131
- GB-A- 2 116 106
- US-A- 3 445 096
- US-A- 4 923 395

## Beschreibung

Bei dem Extrusionsblasverfahren wird "in einer Wärme" gearbeitet, d.h. ein aus einem Blaskopf ausgepreßter Schlauch wird in Vorformlinge geteilt, die im noch plastischen verformbaren Zustand in eine Blasform übergeführt und in dieser zum fertigen Hohlkörper ausgeblasen werden. Beim sogenannten "Reheat-Verfahren" dagegen, auf das die vorliegende Erfindung gerichtet ist, werden auf Vorrat durch Spritzen hergestellte Vorformlinge im erkalteten Zustand eingesetzt, die erst nach einer Wiedererwärmung in eine Blasform eingebracht werden können.

Das Reheat-Verfahren hat u.a. den Vorteil, daß beim vorausgehenden Spritzprozeß durch die gezielte schnelle Abkühlung Gefügezustände "eingefroren" werden können, die sich beim gezielten Wiedererhitzen, mechanischem Recken und Verblasen in physikalische Verbesserungen, wie z.B. erhöhte Fallbruchfestigkeit und Kaltbruchfestigkeit sowie visuelle Transparenz umsetzen lassen.

Ein weiterer Vorteil liegt darin, daß bei der Herstellung von Hohlkörpern mit einer Füll- und Entleerungsöffnung, z.B. Flaschen, Flakons, Dosen, Kanister oder dergleichen, der für den Verschluß präzise auszubildende Bereich, z.B. in Form eines Gewindes, bereits ganz genau am Vorformlingsende in der Spritzmaschine hergestellt werden kann und dann beim Blasen in der Blasform nicht mehr angeformt zu werden braucht. Dadurch kann auch die Blaszeit verkürzt und damit der Ausstoß gegenüber dem Extrusionsblasen erhöht werden, weil dieser Halsbereich jener mit dem größten Querschnitt am fertigen Hohlkörper ist, der, wenn in der Blasform angeformt, die längste Zeit für die erforderliche Abkühlung braucht.

Für das Reheat-Verfahren müssen also die einem Vorrat entnommenen Vorformlinge auf die Blastemperatur wieder erwärmt werden. Dies geschieht meist durch das Vorbeiführen an Infrarot-Strahlern, die in relativ kurzer Zeit die Vorformlinge relativ gleichmäßig erwärmen. Dabei bedeutet "gleichmäig" sowohl die Erwärmung über die axiale Länge des Vorformlings als auch über dessen Querschnitt.

Die größeren Schwierigkeit bedeutet dabei die Erwärmung über den Gesamtquerschnitt, weil der an einer Heizstrecke vorbeilaufende oder vorbeigetaktete und dabei um seine Achse gedrehte Vorformling nur von außen erwärmt werden kann. Die Folge ist ein Temperaturgradient über den Querschnitt. Dieser kann sich beim anschließenden Verblasen und dem häufig diesem vorgeschalteten axialen Recken des Vorformlings auf die Qualität des hergestellten Hohlkörpers nachteilig auswirken, weil sich dann die Innenseite des Vorformlings mit ihrer dann geringeren Temperatur beim Recken und Blasen anders als die äußere, stärker erwärmte Seite verhalten würde. Dann setzen die inneren Bereiche des Vorformlings der Verformung bei dem Verstrecken und Blasen einen größeren Widerstand als die äußeren Bereiche entgegen, wodurch Verspannungen im Hohlkörper entsteheh, die die Festigkeit und das Aussehen des hergestellten Hohlkörpers nachteilig beeinflussen.

Eine gute und gleichmäßige Erwärmung über den Gesamtquerschnitt eines Vorformlings wird mit einem Verfahren nach der EP-A-0 387 737 erziehlt, bei dem die Vorformlinge zur Vermeidung von Rekristallisationserscheinungen auf eine Temperatur unterhalb der Blastemperatur erwärmt, danach abgekühlt und im Anschluß an die Kühlung wieder auf eine Temperatur erwärmt werden, die geringfügig oberhalb der Blastemperatur liegt, wonach die Vorformlinge zum Ausgleich zwischen der Temperatur der Außenwand und der der Innenwand sich auf der Bahn selbst überlassen oder gering abgekühlt werden.

Da Vorrichtungen für die Erwärmung kalter Vorformlinge auf Blastemperatur in einfacher Weise nur so konstruiert werden können, daß die Heizeinrichtungen auf einer Seite der Führungsbahn für die Vorformlinge angeordnet sind, hat es sich auch bewährt, sie während der Bewegung vorbei an den Heizeinrichtungen in Rotation zu halten und von der den Heizeinrichtungen gegenüber liegenden Seite aus die sich drehenden Vorformlinge mit einem Kühlluftstrom anzublasen, wie dies z.B. In der gattungsbildenden DE-A-31 01 282 und FR-A-22 48 131 vorgeschlagen ist

Es stellte sich jedoch heraus, daß die bekannten vorbeschriebenen Maßnahmen für die Verarbeitung von bestimmten Kunststoffen aus der Gruppe der teilkristallinen Polymere nicht ausreichen, deren ein hervorragender Vertreter Polypropylen (PP) ist. Dabei hat aber PP gegenüber anderen Kunststoffen, wie z.B. Polyetylenterephthalat (PET) Vorteile, u.a. eine sehr hohe Bruchfestigkeit, hohe Fallwerte und eine vorzügliche Transparenz sowie ein um 30 % geringeres spezifisches Gewicht und einen etwa halb so hohen Preis. Ein weiterer Vorteil liegt darin, daß Gebinde daraus zur Wärmeabfüllung von Produkten geeignet sind und eine Sterilisation des Behälters sowie des Inhalts nach der Füllung ermöglichen, was z.B. bei medizinischen Füllgütern, wie Blutplasma, wichtig ist.

Der Grund für die extrem schwierige Verarbeitung von teilkristallinen Kunststoffen im Blasverfahren, von denen nachfolgend zur Vereinfachung der Darstellung nur PP erwähnt ist, liegt darin, daß PP ein sehr kleines sogenanntes "Prozeßfenster" besitzt. Darunter versteht man den Temperaturbereich, in dem PP verarbeitet werden kann, um die vorerwähnten günstigen Eigenschaften zu erzielen. Je nach dem Typ hat PP eine ganz bestimmte optimale Verarbeitungstemperatur, die z.B. bei der Anmelderin nur mit einer Toleranz von ± 1 Grad Celsius über- bzw. unterschritten werden darf. Damit ist PP extrem verarbeitungsempfindlich. Ein weiterer Grund für die schwierige Verarbeitung liegt darin, daß eine Infrarotstrahlung im Werkstoff Moleküle zum Schwingen bringt und damit einen Vorformling zusätzlich zu der von außen nach innen transportierten Wärme sozusagen von innen heraus erwärmt. Diese Wirkung wird vor allem durch die am stärksten schwingenden H₂-Moleküle hervorgerufen, aber solche freien H₂-Moleküle fehlen beim PP. Bei PP muß deshalb praktisch die gesamte Wärme über die Länge und über den Querschnitt des Vorformlings durch den Wärmefluß eingebracht werden, also an der Vorformlingsoberfläche dafür immer genügend zur Verfügung stehen und gleichzeitig aber wegen des vorgenannten engen Prozeßfensters eine Überhitzung vermieden werden.

Bisher wurde nach Kenntnis der Anmelderin die einzige Möglichkeit, diesen Umständen Rechnung zu tragen, darin gesehen, PP-Vorformlinge einer ganz behutsamen, langsamen Erwärmung über eine lange Zeit und lange Strecke auszusetzen, wie z.B. beim sogenannten "Hercules-Verfahren". Dieses versuchte eine gleichmäßige Erwärmung über den Querschnitt durch die Dauer der Wärmebeeinflussung zu erreichen, d.h. die Vorformlinge werden etwa 30 Minuten durch einen Ofen geschickt, wobei der weitaus größte Zeitanteil nur der Vergleichmäßigung der Wärme über den Querschnitt dient.

Abgesehen davon, daß dieses Verfahren viel Platz für eine relativ lange und damit große Heizstrecke selbst dann benötigt, wenn man die Vorformlinge auf mehreren parallel zueinander liegenden Bahnen schlangenförmig führt, lassen sich bei Reheat-Maschinen Stillstandszeiten niemals vermeiden, und selbst dann, wenn der Ofen sofort abgeschaltet wird, besteht die Gefahr, daß die in ihm vorhandenen Vorformlinge überhitzt und damit unbrauchbar werden.

Der Erfindung lag deshalb die Aufgabe zugrunde, das Reheat-Verfahren für die bisher gut damit verarbeitbaren Kunststoffe, z.B. PET, darüber hinaus aber auch für einen weiten Bereich von teilkristallinen Kunststoffen, insbesondere Polypropylen, in seinen verschiedenen Varianten und auch für Vorformlinge aus unterschiedlichen Materialschichten (Multilayer), die sowohl teilkristalline als auch amorphe Strukturen haben können, einsetzen zu können und dabei die Temperaturbeeinflussungszeit auf nur wenige Minuten, z.B. etwa fünf Minuten, reduzieren zu können.

Diese Aufgabe löst die Erfindung mit den in den Ansprüchen 1 bis 4 angegebenen Mitteln. Zweckmäßige Ausgestaltungen der Erfindung ergeben sich aus den Unteransprüchen.

Damit besteht die Erfindung allgemein in der Anwendung an sich bekannter und neuer Verfahrensstufen bzw. Vorrichtungsmerkmale, die in neuartiger Weise kombiniert sind.

Das Verfahren nach der Erfindung ist an Hand der schematischen Darstellungen einer Anlage zur Ausführung desselben nachfolgend beschrieben. Dargestellt ist eine Zwei-Linien-Anlage, d.h. eine solche, bei der nebeneinander zwei Linien von Vorformlingen aufgeheizt und anschließend zu Hohlkörpern verarbeitet werden. Dabei kann es sich um der Größe und/oder Gestalt nach gleiche oder verschiedene Vorformlinge je Linie handeln, und diese können in einer oder zwei Blasanlagen ausgeblasen werden.

Die auf Vorrat im Spritzverfahren hergestellten Vorformlinge 1 gelangen über eine sie sortierende und zurecht legende Zuführung 2 auf in gleichen Abständen angeordnete Haltedorne 3, die auf Transportketten 4 montiert sind. Mit diesen werden sie in Pfeilrichtung auf die die Vorformlinge 1 nach der Erwärmungsbehandlung aufnehmenden Organe, z.B. Zangen 5, zubewegt, die sie einer einseitig oder beidseitig der Transporteinrichtung angeordneten, nicht dargestellten Blaseinheit zuführen. Während des Transports auf den Ketten 4 werden die die Vorformlinge stützenden Haltedorne 3 und damit auch die Vorformlinge 1 kontinuierlich um ihre Achse gedreht.

Zwischen der Zuführung 2 für die Vorformlinge 1 und einem ersten Infrarot-Heizblock ist eine bestimmte, mehrere aufgesteckte Vorformlinge 1 umfassende Strecke 7 vorgesehen. Erfindungsgemäß werden die Vorformlinge bereits auf dieser Strecke 7 vor Einleitung des Heizprozesses und danach bis zum letztmöglichen Platz vor den Einrichtungen 5 rotiert, um jeden kleinstmöglichen Temperatureinfluß gleichmäßig auf ihren Umfang zu verteilen. Dabei soll diese Eigenrotation der Vorformlinge über einen nicht zu engen Bereich unabhängig von der Laufgeschwindigkeit der Maschinen regelbar sein, da dies je nach Form und Größe der Vorformlinge einen wichtigen Prozeßparameter darstellt.

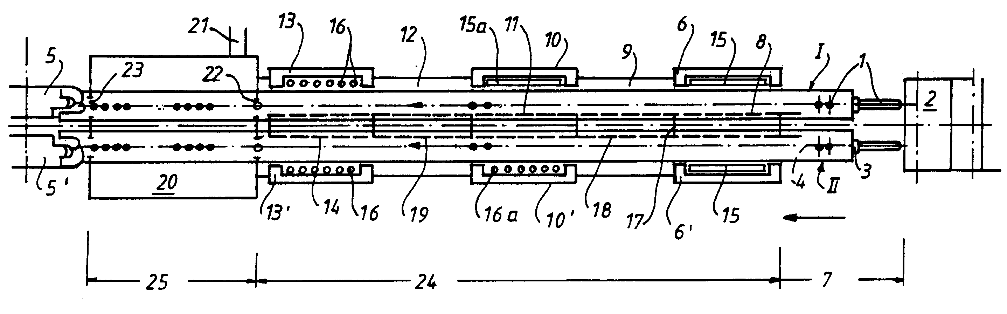

Bei mehreren Linieneinheiten, wie in der Zeichnung dargestellt, soll erfindungsgemäß jede Linie im Bedarfsfall ihren eigenen Rotationsantrieb haben. Außerdem soll die Rotationsrichtung mit der Richtung der Transporteinrichtung 4 übereinstimmen, also bei der dargestellten Ausführungsform entgegen dem Uhrzeigersinn verlaufen, weil bei der dadurch erfolgenden Addition der Vorwärtsgeschwindigkeit eine bessere Regelbarkeit gewährleistet ist.

Nach der Vorstrecke 7 gelangen die Vorformlinge der beiden dargestellten Verarbeitungslinien I und II in die erste Heizstrecke, die aus einem Infrarot-Heizblock 6 bzw. 6' sowie einem diesen zugeordneten, dem Strahler der Blöcke gegenüberliegenden Reflektor 8 besteht. An den Heizblock 6 schließt sich eine Temperaturausgleichsstrecke 9, d.h. eine solche ohne eine Temperaturbeeinflussung oder nur mit regelbarer Kühlung an. Auf der gegenüberliegenden Seite der Verarbeitungslinie II befindet sich eine gleiche Ausgleichsstrecke. Diese gibt der aufgeprägten Wärme Gelegenheit zur Verteilung über die Länge und insbesondere über den Querschnitt der Vorformlinge. Dieser Vorgang wiederholt sich in einem zweiten Heizblock 10 mit Reflektor 11 und einer sich an diesen anschließenden Temperaturausgleichsstrecke 12. Auf diese Weise werden die Vorformlinge intervallartig von der Temperatur, mit der sie zugeführt werden, bis in die Nähe der Verarbeitungstemperatur gebracht. An die Ausgleichsstrecke 12 schließt sich der letzte Infrarot-Heizblock 13 mit Reflektor 14 an, der den hier bereits sehr in die Nähe der Blastemperatur gebrachten Vorformlingen den letzten für das Verblasen noch notwendigen Wärmeinhalt vermittelt. Dabei hat durch das Vorbeitakten durch die Ausgleichsstrecken 9 und 12 zwischen den Heizblöcken 6 und 10 bereits ein weitgehender Ausgleich der mitgeteilten Wärme über den Vorformlingsquerschnitt stattgefunden.

Die Heizblöcke 6, 10 und 13 bzw. die gegenüberliegenden Heizblöcke 6',10 ,13' können mit horizontalen oder vertikalen Infrarot-Quarzstrahlerstäben bestückt sein. Bei der dargestellten Ausführungsform sind die Heizblöcke 6, 6' und 10 mit horizontal angeordneten Heizstäben 15,15', 15a, die letzten Heizblöcke 13,13' aber mit vertikal angeordneten Stäben 16,16' bestückt. Damit läßt sich in den Heizblöcken 13,13' eine feinfühlige Restwärmeerhöhung erzielen, indem Heizstäbe 16,16' einzeln oder gruppenweise zu- oder abgeschaltet werden können. Außerdem können die Abstände zwischen den Heizblöcken verändert und damit auch die Ausgleichsstrecken 9 und 12 verkürzt oder verlängert werden.

Der mittlere Heizblock 10 für die eine und 10' für die andere Linie weisen, nur zur Darstellung der Möglichkeiten, unterschiedlich angeordnete Heizstäbe, also horizontal angeordnete Heizstäbe 15a für den Block 10 und vertikal liegende Heizstäbe 16a für den Block 10' auf.

Das wird nicht die Regel sein, kann aber dann in Frage kommen, wenn in der Vorrichtung nach der Erfindung auf zwei Linien Hohlkörper sehr unterschiedlicher Gestalt und/oder Größe hergestellt werden sollen und bereits im zweiten Heizblock eine feinfühligere Temperatursteuerung erforderlich erscheint. Für diesen Fall sind die Heizblöcke zweckmäßig so eingerichtet, daß man die Heizstäbe wahlweise vertikal oder horizontal einspannen kann.

Zur Erfindung gehört ferner, daß die rotierenden Vorformlinge, während sie nacheinander die Heizblöcke oder Stationen 6,10 und 13 bzw. 6',10' und 13' durchlaufen auf der einen Seite (Außenseite der Vorrichtung) erwärmt und gleichzeitig auf der gegenüber liegenden Seite (Innenseite der Vorrichtung) gekühlt werden. Hierzu sind die Reflektoren 8, 11 und 14 luftgekühlt, wobei die Luftkühlung geregelt werden kann, einerseits zur Kühlung der sich aufheizenden Reflektoren von innen und andererseits, um über Durchbrüche, Löcher, Schlitze oder eine Art Perforation in den Reflektoren die Außenhaut der Vorformlinge vor Überhitzung zu schützen.

Auf der einen Seite der Strecke, die die Vorformlinge für ihre Erwärmung auf Blastemperatur durchlaufen müssen, Heizeinrichtungen und auf der gegenüberliegenden Seite Kühleinrichtungen vorzusehen, ist an sich z.B. durch die DE-A-31 01 282 und die FR-A-22 48 131 bekannt. Dies allein reicht aber für die optimale Wärmebehandlung von Vorformlingen aus PP nicht aus. Außerdem ist bei den durch diese Schriften bekannten Vorrichtungen für jeden Vorformling je eine Kühlstromdüse vorgesehen. Dies hat zur Folge, daß, wenn jeweils für eine Gruppe von Vorformlingen für jeden eine Düse vorgesehen ist, die Vorformlinge für das Anblasen durch den Kühlstrom auf der hierfür vorgesehenen Strecke zum Stillstand gebracht werden müssen, oder, wenn für alle auf der gesamten Heizstrecke je eine Düse vorgesehen ist, diese die Bewegungen der Vorformlinge synchron mitmachen müssen. Stillstandszeiten im Ablauf der Erwärmung sind aber auf jeden Fall nachteilig und mit den Vorformlingen mitbewegte Düsen, die, worauf sich die Erfindung richtet, auf einer geraden Bahn von der Stelle des Aufbringens der Vorformlinge auf die Bewegungsmittel bis zur Blaseinrichtung geführt werden, müßten wieder an den Ausgangspunkt der Heizstrecke zurückgeführt werden, was konstruktiv aufwendig ist. Die Erfindung geht einen anderen Weg, indem sie stationäre Reflektoren vorsieht, durch die die Kühlluft mit stationären Kühlstromerzeugern an die Oberfläche der Vorformlinge abgegeben wird. Dies vereinfacht die Konstruktion der Anlage und schafft eine Atmosphäre, in die jeder vorher gerade erwärmte Oberflächensektor eines Vorformlings bei jeder Umdrehung eintaucht.

Damit die gekühlte Luft in Richtung der jeweils gegenüber liegenden Heizblöcke abgegeben wird, sind die stationären Reflektoren durch Zwischenwände 17 in Kammern unterteilt. Da die Wärmstrahlung der Heizblöcke 6, 10 und 13 nicht gebündelt auf die Vorformlinge übertragen wird und die auf ihrem Weg den Bereich eines Blocks gerade verlassenden Vorformlinge noch Wärme auf ihrer Oberfläche transportieren, können auch die Ausgleichsstrecken 9 und 11 durch Reflektoren 18, 19 abgeschirmt sein, die ebenso wie die anderen durchbrochen sind und einen auf ihrer Rückseite erzeugten Kühlluftstrom auf die Vorformlinge lenken.

An den letzten Feinheizblock 13 schließt sich erfindungsgemäß eine Schutz- und Temperierungskammer 20 mit Umluftheizung an. Damit wird über die Luftzuführung 21 ein mit in der Temperaturhöhe stufenlos regelbares, luftbeheiztes, quasi geschlossenes System geschaffen. Den unteren Abschluß bildet der als Transportsystem dienende Gliedkörper, also die Transportkette 4, während von oben und von den Seiten eine Blechabschirmung der Kammer 20 diese Funktion erfüllt. "Quasi geschlossen" ist dieses System deshalb, weil in Durchlaufrichtung der Kette 4 vorn und hinten, also hinter dem Heizblock 13 und vor den Zangen 5 der Größe der Vorformlinge angepaßte Durchgänge 22,23 vorhanden sein müssen. Deshalb wird auch in der Regel eine Luftabführung nicht erforderlich sein.

Durch die Kombination einer intervallartigen Aufheizung in den Infrarot-Heizblöcken 6,10 und 13 mit gleichzeitiger Kühlung auf der den Strahlern der Heizblöcke gegenüberliegenden Seite und den dazwischen liegendenden Ausgleichsstrecken 9 und 12 sowie der sich an die letzte Infrarot-Heizung anschließenden Umluftheizung in der Schutz- und Temperierkammer 20 kann in verhältnismäßig kurzer Zeit, z.B. in einer Zeit von 5 Minuten, nicht nur eine exakte Blastemperatur erzielt, sondern auch eine Verteilung derselben über den gesamten Vorformling, insbesondere auch seinen Gesamtquerschnitt, erreicht werden. In dieser Kombination dient die Infrarot-Heizung dazu, den Vorformlingen eine verlangte exakte Temperatur, nämlich die Blastemperatur, aufzuprägen, während die Umluftheizung in der Kammer 20 einerseits dazu dient, die Vorformlinge gegen schädliche Umgebungseinflüsse abzuschirmen und andererseits dazu, den Ausgleich unterschiedlicher Temperaturpotentiale im Vorformling sicherzustellen. Damit wird dem einzelnen Vorformling in einer Schutzzone nochmals Zeit gegeben, sich bezüglich der Wärmeverteilung über die Wandstärke auszugleichen, ohne Wärmepotential an die Umgebung abgeben zu müssen.

Damit durchlaufen die Vorformlinge, nachdem sie auf Dorne ihrer Transporteinrichtung aufgesteckt wurden, nacheinander und ehe sie in die Blasform einer Blaseinrichtung gelangen,
1. eine Vorstrecke 7, die dafür sorgt, daß sie schon bevor sie in den ersten Heizblock gelangen, durch ihre Eigenrotation verhindern, daß durch unkontrollierte Einflüsse eine einseitige Beeinflussung erfolgt;
2. eine Heiz-/Kühlstrecke 24 mit abwechselnden Heiz- und Beruhigungsabschnitten, in der sie auf die Blastemperatur erwärmt werden und sich diese Wärme über ihre Länge und insbesondere ihren Querschnitt verteilt;
3. eine Warmlufttemperierungsstrecke 25, die den in der Strecke 23 erzeugten Zustand stabilisiert und, falls noch erforderlich, für den vollständigen Temperaturausgleich über ihren Querschnitt sorgt.

In der Vorstrecke 7, in der auf die Vorformlinge noch keine definierte Wärmeeinwirkung ausgeübt wird, wird dafür gesorgt, daß diese schon, wenn sie in den ersten Abschnitt der Heizstrecke gelangen, vorbereitet sind, daß die Temperaturbeeinflussung möglichst gleichmäßig auf ihren Umfang und ihre Länge erfolgt und Außeneinflüsse, z.B. Temperaturschwankungen in der Werkhalle minimiert werden. In der Heiz-/Kühlstrecke 24 werde, die Vorformlinge dann in mehreren durch Ausgleichsabschnitte unterbrochenen Stufen auf die Blastemperatur erwärmt und in dieser nachgeschalteten Strecke 25 kann zusätzlich zu den Ausgleichsabschnitten eine weitere Vergleichmäßigung der Temperatur, insbesondere über den Querschnitt, erzielt werden. Außerdem werden hier die Vorformlinge gegen schädliche Umgebungseinflüsse isoliert.

Es kann nie ausgeschlossen werden, daß die Transporteinrichtung einer solchen Vorrichtung, also z.B. die Gliederkette 4, während des Bearbeitungsprozesses ungewollt stillsteht oder gewollt zum Stillstand gebracht werden muß. Selbst wenn in einem solchen Fall die Heizeinrichtungen sofort abgeschaltet werden, könnten die Vorformlinge durch die auf der Strecke 24 und eventuell auch der Strecke 25 gestaute Wärme mit schädlicher Folge für ihr Gefüge überheizt werden, aber die von der Transportgeschwindigkeit unabhängige Regelung der Rotationsgeschwindigkeit und die Luftkühlung durch die Reflektoren hindurch, verhindern das.

Da einerseits die einzusetzenden Intensitäten der Heizblöcke hoch liegen (bei PP z.B. bis über 170°C) und andererseits im Umlufttemperierbereich aufgeheizte Luft ungehindert die Vorformlingsträger beeinflussen kann, soll entlang der unbenutzten Rückführstrecke der Transporteinrichtung mit ihrem Vorformlingsträger ein geeignetes Rückkühlsystem eingesetzt werden.

## Patentansprüche

1. Verfahren zur Erwärmung von einem Vorrat entnommenen, im Spritzverfahren hergestellten, kalten Vorformlingen aus teilkristallinen Kunststoffen, wie Polyolefinen, insbesondere Polypropylen, die auf einer geraden Bahn vorwärts bewegt und gleichzeitig um ihre Achse gedreht in einer Heizstrecke durch Infrarotstrahlung auf Blastemperatur erwärmt sowie durch einen Kühlluftstrom aus einer gegenüberliegenden Düse angeblasen und danach einer Blaseinrichtung zum Aufblasen zu Hohlkörpern zugeführt werden, **gekennzeichnet** durch die folgenden Schritte:
a) die Vorformlinge werden, bevor sie in die Heizstrecke (24) gelangen, über eine mehrere nebeneinander stehende Vorformlinge umfassende Strecke (7) bereits in Rotation gehalten;
b) in der Heizstrecke werden die Vorformlinge an Infrarotstrahlern vorbeigeführt und danach über eine Ausgleichsstrecke ohne Wärmezufuhr geführt;
c) während des Durchlaufens der Heiz- und Ausgleichsstrecke werden die Vorformlinge auf der der Erwärmung durch Infrarotstrahler gegenüber liegenden Seite einem Kühlluftstrom ausgesetzt;
d) im Anschluß an die Heizstrecke durchlaufen die Vorformlinge eine Heißluftschutzstrecke (25) in einem quasi geschlossenen System, bevor sie der Blaseinrichtung zugeführt werden.

2. Verfahren nach dem Anspruch 1, dadurch **gekennzeichnet,** daß die Vorformlinge während des Verfahrensschritts b) mehrmals abwechselnd durch Infrarotstrahler erwärmt und danach durch eine Ausgleichsstrecke ohne Wärmezufuhr geführt werden.

3. Verfahren nach den Ansprüchen 1 und 2, dadurch **gekennzeichnet,** daß vor der Überführung in die Heißluftschutzstrecke (25) die Vorformlinge in der Verfahrensstufe b) an Infrarotstrahlern vorbeibewegt werden.

4. Vorrichtung zur Ausführung des Verfahrens nach den Ansprüchen 1 bis 3, mit mindestens einer auf gerader Bahn geführten, die Vorformlinge (1) auf Dornen aufnehmenden Transporteinrichtung (4) und einer Heizstrecke (24), auf der in Abständen Infrarot-Heizblöcke (16,13) mit Infrarotstrahlern (15,16) und diesen gegenüber Reflektoren (8,11,14) vorgesehen sind, wobei die Vorformlinge während ihrer Rotation auf der den Heizblöcken gegenüberliegenden Seite gekühlt werden, dadurch **gekennzeichnet,** daß die Transporteinrichtung (4) auf der Zuführungsseite für die Vorformlinge (1) um einen Abschnitt (7) verlängert ist, auf dem die Vorformlinge bereits rotiert werden und der mindestens so viele Vorformlingsplätze umfaßt, daß die aus der Heizstrecke (24) abstrahlende Wärme keinen einseitigen Einfluß auf einen Vorformling ausübt, daß die Reflektoren mit Löchern, Schlitzen oder dergleichen Öffnungen versehen sind, durch die ein Kühlmittelstrom auf die Vorformlinge gelenkt wird, und daß sich an den letzten Heizblock (13) eine oben und an den Seiten geschlossene Umluftschutzkammer (20) mit Durchbrüchen (22,23) für den Durchlauf der Vorformlinge anschließt, die sich bis nahe an die Greifeinrichtung (5) für die Überführung der Vorformlinge in die Blaseinrichtung erstreckt.

5. Vorrichtung nach dem Anspruch 4, dadurch **gekennzeichnet,** daß die Infrarot-Strahler (15,16) in den Heizblöcken (6,10,13) wahlweise horizontal oder vertikal angeordnet sind.

6. Vorrichtung nach dem Anspruch 5, dadurch **gekennzeichnet,** daß die Infrarot-Strahler (15,16) in den Heizblöcken (6,10,13) einzeln oder gruppenweise zu- und abschaltbar sind.

7. Vorrichtung nach dem Anspruch 4, dadurch **gekennzeichnet,** daß die Höhe der Heizblöcke über der Transporteinrichtung (4) und/oder ihr gegenseitiger Abstand und/oder ihr Abstand zu der Vorformlingsebene verstellbar ist.

8. Vorrichtung nach den Ansprüchen 4 und 5, dadurch **gekennzeichnet,** daß die Heizblöcke (6,10,13) für die Aufnahme von horizontal liegenden Infrarot-Strahlern (15) oder vertikal liegenden Infrarot-Strahlern eingerichtet sind.

9. Vorrichtung nach dem Anspruch 4, dadurch **gekennzeichnet,** daß auch die Abschnitte zwischen den Heizblöcken Kammern mit zwischen ihren Wänden liegenden Lüftern aufweisen.

10. Vorrichtung nach einem oder mehreren der voranstehenden Ansprüche 3 bis 8, dadurch **gekennzeichnet,** daß etwa 70 bis 80% der Gesamtstrecke (24+25) Infrarot-Heizstrecke (24) und etwa 20 bis 30% Warmluft-Schutzstrecke (25) ist.

11. Vorrichtung nach einem oder mehreren der vorangehenden Ansprüche 3 bis 9, **gekennzeichnet** durch eine Kühleinrichtung für die Rückführung der leeren Transporteinrichtung.

## Claims

1. A process for heating cold preforms taken from a store and manufactured in an injection moulding process, which preforms are made from partially crystalline plastics materials such as polyolefins, particularly polypropylene, and which while moving forwardly on a straight track and simultaneously rotating about their axis are heated by infrared radiation in a heating section up to blowing temperature while by a cooling air stream blows at them from an oppositely lying nozzle and are thereafter supplied to a blowing apparatus for blowing into hollow bodies, **characterised by** the following steps:
(a) before they reach the heating section (24), the preforms are held in readiness in rotation over a section (7) containing several preforms next to each other;
(b) in the heating section the preforms are conveyed over a compensation section without heat supply;
(c) during the passage through the heating and compensating sections the preforms are exposed to a cooling air stream on the side opposite to the infrared radiators;
(d) adjoining the heating section the preforms pass through a hot air protection section (25) in an approximately closed system before they are passed to the blowing apparatus.

2. A process according to claim 1, **characterised in that** during the process step (b) the preforms are several times alternatingly heated by the infrared radiators and passed thereafter through a compensation section without heat input.

3. A process according to claims 1 and 2, **characterised in that** the preforms are moved past infrared radiators in process step (b) before being passed over to the hot air protection section.

4. Apparatus for carrying out the process according to claims 1 to 3, with a transport device (4) guided on a straight track and accommodating the preforms (1) on mandrels and a heating section (24) in which spaced apart infrared heater blocks (16, 13) with infrared radiators (15, 16) and reflectors (B, 11, 14) opposite them are provided, wherein during their rotation the preforms are cooled on their side opposite the heating blocks, **characterised in tha**t the transport device (4) is prolonged on the supply side for the preforms (1) by a section (7) on which the preforms are already in rotation and which includes at least so many places for preforms as to ensure that the heat radiated out from the heating section (4) has no partial influence on the preforms, in that the reflectors are provided with holes, slits or the like apertures through which a cooling air stream is deflected at the preforms, and in that the last heating block (13) is adjoined by a recirculatory air protection chamber (20) which has openings (22, 23) for the through-pass of the preforms, and which extends up to the vicinity of the grab device (6) for the transfer of the preforms to the blowing apparatus.

5. Apparatus according to claim 4, characterised in that the infrared radiators (15,16) in the heating blocks (6, 10, 13) are arranged selectably horizontally or vertically.

6. Apparatus according to claim 5 characterised in that the infrared radiators (15,16) in the heating blocks (6, 10, 13) are switchable on or off individually or in groups.

7. Apparatus according to claim 4, characterised in that the height of the heating blocks above the transport device (4) and/or their spacing from the plane of the preforms is adjustable.

8. Apparatus according to claims 4 and 5 characterised in that the heating blocks (6, 10, 13) are adapted for accommodating horizontally lying infrared radiators (15) or vertically lying infrared radiators.

9. Apparatus according to claim 4, characterised in that the sections between the heating blocks also have chambers with blowers lying between the walls.

10. Apparatus according to one or more of the preceding claims 3 to 8, characterised in that approximately 70 to 80% of the total track (24 + 25) is an infrared heating section (24) and approximately 20 to 30% in a hot air protection section (25).

11. Apparatus according to one or more of the preceding claims 3 to 9, characterised by a cooling device for recirculating the empty transport device.

## Revendications

1. Procédé pour le réchauffement de paraisons froides, prélevées d'une réserve et fabriquées suivant le moulage par injection à partir de matières plastiques partiellement cristallines, telles que les polyoléfines, en particulier le polypropylène, qui se déplacent vers l'avant sur une voie rectiligne, tout en étant réchauffées en tournant autour de leur axe, sur une section chauffante pour le rayonnement infrarouge pour être amenées à la température de soufflage, qui sont ensuite soufflées par un courant d'air de refroidissement provenant d'une buse opposée et qui sont ensuite amenées à un dispositif de soufflage pour être soufflées en forme de corps creux,
caractérisé par les étapes suivantes :
a) avant de parvenir à la section de chauffage (24), les paraisons sont déjà maintenues en rotation par une section (7) comprenant plusieurs paraisons se trouvant les unes à côté des autres ;
b) dans la section de chauffage les paraisons sont amenées à passer devant des émetteurs de rayons infrarouges et sont ensuite guidées par une section de compensation sans apport de chaleur ;
c) pendant la traversée des sections de chauffage et de compensation les paraisons sont exposées à un courant d'air de refroidissement, sur le côté opposé à la chaleur générée par l'émetteur de rayons infrarouges ;
d) à la suite de la section de chauffage, les paraisons traversent une section de protection contre l'air chaud (25) dans un système quasi fermé avant d'être amenées au dispositif de soufflage.

2. Procédé selon la revendication 1, caractérisé en ce que les paraisons sont réchauffées, pendant l'étape de procédé b), plusieurs fois en alternance par des émetteurs de rayons infrarouges et sont ensuite guidées à travers une section de compensation sans apport de chaleur.

3. Procédé selon les revendications 1 et 2, caractérisé en ce qu'avant le transfert à la section de protection d'air chaud (25), les paraisons sont exposées à des émetteurs de rayons infrarouges dans l'étape de procédé b).

4. Dispositif pour la mise en oeuvre du procédé selon les revendications 1 à 3, comprenant au moins un dispositif de transport (4) guidé sur une voie rectiligne et recevant les paraisons (1) sur des mandrins et comprenant une section chauffante (24) sur laquelle il est prévu à distance, des blocs chauffants infrarouges (16, 13), présentant des émetteurs de rayons infrarouges (15, 16), et opposés à des réflecteurs (8, 11, 14), les paraisons étant refroidies pendant leur rotation sur la face opposée aux blocs chauffants, caractérisé en ce que le dispositif de transport (4) est prolongé, sur la face d'arrivée des paraisons (1), d'un tronçon (7) sur lequel les paraisons sont déjà mises en rotation et qui comprend au moins suffisamment de place de paraisons pour que la chaleur, émise depuis la section chauffante (24), n'exerce pas une influence unilatérale sur une paraison en ce que les réflecteurs sont munis de trous, de fentes ou d'ouvertures similaires à travers lesquelles un courant d'air de refroidissement est dirigé sur les paraisons, et en ce que le dernier bloc chauffant (13) se continue par une enceinte de protection (20), contre l'air environnant, qui est fermée sur les côtés et en haut et qui est munie de percées (22, 23) pour le passage des paraisons, l'enceinte s'étendant jusqu'à proximité du dispositif de préhension (5) pour le transfert des paraisons dans le dispositif de soufflage.

5. Dispositif selon la revendication 4, caractérisé en ce que les émetteurs de rayons infrarouges (15, 16) sont disposés dans les blocs chauffants (6, 10, 13) au choix à l'horizontale ou à la verticale.

6. Dispositif selon la revendication 5, caractérisé en ce que les émetteurs de rayons infrarouges (15, 16) peuvent être connectés ou déconnectés dans les blocs chauffants (6, 10, 13) individuellement ou en groupe.

7. Dispositif selon la revendication 4, caractérisé en ce que la hauteur des blocs chauffants au-dessus du dispositif de transport (4) et/ou sa distance par rapport au plan de la paraison sont réglables.

8. Dispositif selon les revendications 4 et 5, caractérisé en ce que les blocs chauffants (6, 10, 13) sont prêts à recevoir des émetteurs de rayons infrarouges (15) placés à l'horizontale ou des émetteurs de rayons infrarouges placés à la verticale.

9. Dispositif selon la revendication 4, caractérisé en ce que les tronçons présentent entre les blocs chauffants des chambres munies d'aérateurs se trouvant entre leurs parois.

10. Dispositif selon l'une ou plusieurs des revendications précédentes 3 à 8, caractérisé en ce qu'environ 70 à 80 % de l'ensemble de la section (24+25) constitue la section chauffante infrarouge (24) et environ 20 à 30 % la section de protection (25) contre l'air chaud.

11. Dispositif selon l'une ou plusieurs des revendications précédentes 3 à 9, caractérisé par un dispositif de refroidissement pour le retour à vide du dispositif de transport vide.
